# EUROPÄISCHE PATENTANMELDUNG

(11) **EP 2 141 461 A2**
(43) Veröffentlichungstag der Anmeldung: **06.01.2010**
(21) Anmeldenummer: 09008531.7
(22) Anmeldetag: 30.06.2009
(51) Int. Cl.: G01D 5/14

(54) **Vorrichtung zur Erfassung einer Position eines Messobjektes mit vergrössertem Messbereich**

(30) Priorität: 30.06.2008 DE 102008030295
(71) Anmelder: Hirschmann Automotive GmbH, 6830 Rankweil (AT)
(72) Erfinder: Dengler, Werner, 6714 Nüziders (AT); Walser, Bastien, 6800 Feldkirch (AT)
(74) Vertreter: Greif, Thomas

(57) **Zusammenfassung**

Die Erfindung betrifft eine Vorrichtung (1) zur Erfassung einer Position eines Messobjektes, die einem Hall-Sensor (2) sowie einen mit dem Hall-Sensor (2) zusammenwirkenden Schaltmagneten (3) aufweist, wobei erfindungsgemäß vorgesehen ist, dass der Hall-Platten aufweisende Hall-Sensor (2) mit Differenzsensoren versehen ist, die auf Feldunterschiede zwischen den Hall-Platten reagieren.

## Beschreibung

Die Erfindung betrifft eine Vorrichtung zur Erfassung einer Position eines Messobjektes, die einen Hall-Sensor sowie einem mit dem Hall-Sensor zusammenwirkenden Schaltmagneten aufweist, gemäß den Merkmalen des Oberbegriffes der Patentanspruches 1.

Absolut messende Hall-Sensoren, die als Schalter eingesetzt werden, haben enge Grenzen bezüglich des Schaltabstandes, d. h. des Abstandes zwischen dem Hall-Sensor und dem damit zusammenwirkenden Schaltmagneten. Die Vergrößerung des Schaltabstandes verschlechtert zunehmend die Störunempfindlichkeit und hat seine Grenzen, wenn ein bestimmter vorgegebener magnetischer Fluss unterschritten wird. Zudem bewirken die Fertigungstoleranzen von automatisiert und in Großserie hergestellte Hall-Sensoren eine kontinuierliche Verschlechterung der spezifizierten Eigenschaften.

Grundsätzlich soll bei der zu verbessernden Vorrichtung jedoch der bekannte Hall-Effekt zur Messung von Magnetfeldern und Strömen oder zur Lageerfassung ausgenutzt werden. Wird ein Hall-Sensor von einem Strom durchflossen und in ein senkrecht dazu verlaufendes Magnetfeld gebracht, liefert er eine Ausgangsspannung an eine Auswerteschaltung, wobei die Ausgangsspannung proportional zu dem Produkt aus magnetischer Feldstärke und dem Strom ist. Ist der Strom, der eingeprägt werden kann, bekannt, kann man die magnetische Feldstärke messen. Wird das Magnetfeld durch einen Stromdurchflossenen Leiter oder eine Spule erzeugt, kann man potenzialfrei die Stromstärke in diesem Leiter bzw. der Spule messen. Ein Hall-Sensor liefert auch dann ein Signal, wenn das von dem Schaltmagneten erzeuge Magnetfeld konstant ist. Das ist der entscheidende Vorteil im Vergleich zur Paarung Magnet und Spule. Sobald der Magnet nicht bewegt wird, ist die in der Spule induzierte Spannung gleich Null. Der Magnet wird daher nicht erkannt.

In der Automobilindustrie finden Hall-Sensoren vielfältige Anwendung, z. B. im Gurtschloss, in Türschließsystemen, bei der Pedalzustandserkennung, in der Getriebeschaltung oder zur Erkennung des Zündzeitpunktes bei Brennkraftmaschinen. Hauptvorteil solcher Hall-Sensoren ist die Unempfindlichkeit gegen (unmagnetischen) Schmutz und Wasser sowie Temperaturschwankungen und Vibrationen.

Eine Anwendung eines Hall-Sensors (ausgebildet als Magnetschalter) ist aus der EP 1 577 178 A1 bekannt. Diese europäische Anmeldung offenbart einen Gurtschlossschalter zur Erkennung des Zustandes, ob ein Gurtschloss eines Sicherheitsgurtes eines Fahrzeuges geöffnet oder geschlossen ist, wobei zur Erfassung des Zustandes im Gurtschloss ein Magnetschalter angeordnet ist. Dieser Magnetschalter wird dann betätigt, wenn die Schließe des Gurtes sich in direkter Nachbarschaft des Magnetschalters befindet. Umgekehrt bedeutet dies, dass der Gurtschlossschalter einen offenen Gurt detektiert, wenn sich die Schließe nicht in direkter Nachbarschaft des Magnetschalters befindet.

Der Erfindung liegt die Aufgabe zugrunde, eine gattungsgemäße Vorrichtung dahingehend zu verbessern, dass sich die Schaltabstände vergrößern lassen, wobei die Störunempfindlichkeit und die Reproduzierbarkeit beibehalten und im Besonderen auch verbessert werden sollen.

Diese Aufgabe ist durch die Merkmale des Patentanspruches 1 gelöst.

Erfindungsgemäß ist vorgesehen, dass der zumindest zwei Hall-Platten aufweisende Hall-Sensor mit Differenzsensoren versehen ist, die auf Feldunterschiede zwischen den Hall-Platten reagieren. Diese Reaktion erfolgt dann, wenn die erfindungsgemäße Vorrichtung zur Erfassung der Position des Messobjektes relativ zu dem Messobjekt selber bewegt wird. Dabei ist die eine Variante denkbar, dass die Vorrichtung zur Erfassung der Position des Messobjektes fest und nicht bewegbar angeordnet ist und relativ bewegbar dazu das Messobjekt bewegt werden kann, wobei der Schaltmagnet an dem Messobjekt angeordnet ist, von dem Messobjekt selber gebildet ist oder in dem Messobjekt integriert ist. Der andere Fall ist ebenfalls denkbar, dass das Messobjekt mit dem Schaltmagneten feststehend angeordnet ist, wobei relativ dazu die Vorrichtung zur Erfassung der Position des Messobjektes bewegbar ist.

Die erfindungsgemäße Lösung basiert somit auf der Abkehrung von der aus dem Stand der Technik bekannten Absolutmessung auf eine Relativmessung. Begünstigt wird diese Ausführung durch die erfindungsgemäßen Differenzsensoren, die auf die Feldunterschiede zwischen ihren beiden Hall-Platten reagieren.

In Weiterbildung der Erfindung sind die Differenzsensoren dazu ausgebildet, in der Nähe des Nullpunktes zu schalten, sodass das Einschalten bei Einwirken eines magnetischen Flusses durch den Schaltmagneten und das Ausschalten bei einem invertierten magnetischen Fluss erfolgt. Durch diesen Aufbau des Magnetkreises wird dieser Effekt verstärkt und macht ihn in besonders vorteilhafter Weise reproduzierbar für Vorrichtungen zur Erfassung der Position von Messobjekten, die in großen Stückzahlen (Serie) und insbesondere automatisiert hergestellt werden.

In Weiterbildung der Erfindung ist in der Nähe zumindest einer der Hall-Platten ein fördermagnetischer Flusssammler angeordnet. In der Nähe zumindest einer Hall-Platte wird somit ein fördermagnetischer Flusssammler eingesetzt, der für einen asymmetrischen Feldaufbauverantwortlich ist. Dieser bewirkt, dass ein Schaltpunkt auch bei größeren und somit hohen Abständen zwischen der Vorrichtung zur Erfassung der Position des Messobjektes und des Schaltmagneten sicher erreicht wird, sodass damit auch die Störunempfindlichkeit bei größeren Abständen beibehalten oder sogar gesteigert wird.

In Weiterbildung der Erfindung ist ein Löschmagnet vorgesehen. Je nach Anwendungsfall kann, wie hier dargestellt, ein weiterer Löschmagnet eingesetzt werden, der das Zurücksetzen des Systems bei Fehlen eines magnetischen Targets (an dem Messobjekt angeordneter Schaltmagnet) erzwingt.

In Weiterbildung der Erfindung weist der Hall-Sensor einen Rückstellmagneten auf. Die zumindest eine Hall-Platte, die vorzugsweise als ferromagnetisches Plättchen ausgebildet ist, dass an der Oberseite des Hall-Sensors befestigt wird, zieht den magnetischen Fluss an und die dort entstehende Feldstärke reicht aus, um einen Differenzhallschalter (Hall-Sensor mit Differenzsensoren) zum Schalten zu bringen. Zusätzlich ist noch der Rückstellmagnet erforderlich, um wieder ein sicheres Zurückschalten von dem einen Schaltzustand in den anderen Schaltzustand zu gewährleisten.

Mit der Gestaltung des Rückstellmagneten, insbesondere dessen Größe, dessen Magnetfeld und dessen Anordnung, kann auch der Abstand (Schaltabstand) beeinflusst werden, in welchem Bereich der Hall-Sensor in Funktion geht, d. h., welcher Abstand unterschritten bzw. überschritten werden muss, damit der Hall-Sensor von dem einem Schaltzustand in den anderen Schaltzustand gelangt.

Das Schaltverhalten der Vorrichtung zur Erfassung einer Position des Messobjektes, auch Weitbereichs-Hall-Schalter genannt, wird bestimmt in vorteilhafter Weise durch die Geometrie des hochpermeablen Plättchens, der Stellung des Rückstellmagneten und der Stärke des Schaltmagneten.

Daraus ergeben sich die Vorteile, dass der Bereich, in dem der Schaltmagnet, also die Stellung des Messobjektes relativ zu dem Hall-Sensor, detektiert werden kann, um ein Vielfaches größer ist als bei herkömmlichen Systemen des Standes der Technik. Ein weiterer Vorteil ist darin zu sehen, dass die Baugröße nicht zwingend größer sein muss als die Baugröße bei bestehenden Sensoren.

Die Einsatzbereiche der erfindungsgemäßen Vorrichtung sind überall dort, wo bisherige Systeme (Produkte) nicht zum Einsatz kommen konnten, da der Wirkabstand zwischen Hall-Sensor und Schaltmagnet am Messobjekt zu groß ist. Diese Größe des Abstandes resultierte bei herkömmlichen Systemen aus Fertigungstoleranzen oder auch aus speziellen Anforderungen der Anwendung, z. B. dann, wenn das bewegbare Messobjekt einen großen Bewegungsweg relativ zu dem feststehenden Hall-Sensor aufweist.

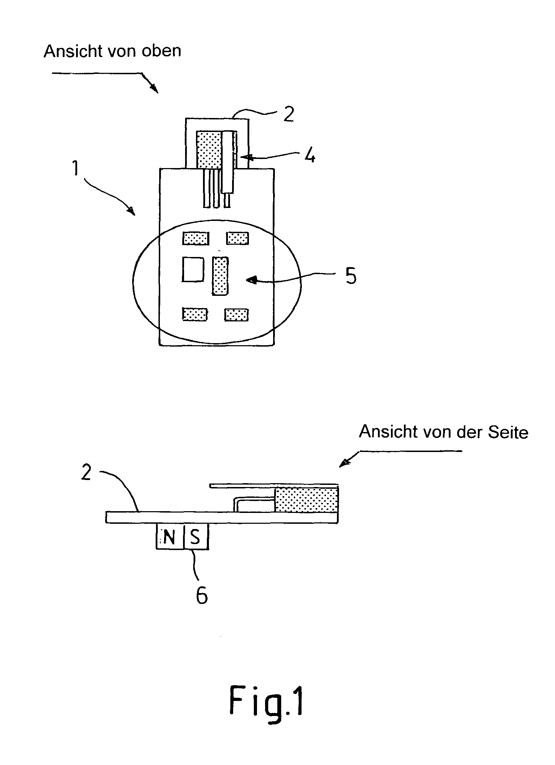

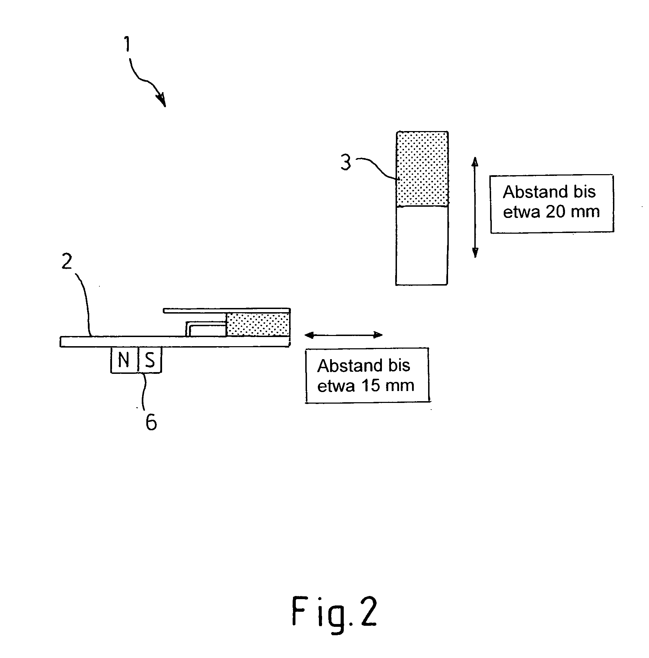

Ein Ausführungsbeispiel einer erfindungsgemäßen Vorrichtung zur Erfassung einer Position eines Messobjektes ist, soweit im Einzelnen dargestellt, in den Figuren 1 und 2 gezeigt und im Folgenden beschrieben.

Mit der Bezugsziffer 1 ist eine Vorrichtung zur Erfassung einer Position eines hier nicht dargestellten Messobjektes bezeichnet, die einen Hall-Sensor 2 aufweist, der mit einem Schaltmagneten 3 zusammenwirkt. Der Schaltmagnet 3, der an dem Messobjekt angeordnet ist, der von dem Messobjekt selber gebildet ist oder der in dem Messobjekt integriert ist, ist bewegbar zu dem Hall-Sensor 2, der eine Hall-Platte 4 aus einem hochpermeablen Werkstoff ohne magnetische Hysterese aufweist. Außerdem ist eine zusätzliche Beschaltung 5 vorhanden, wobei elektronische Bauteile dieser zusätzlichen Beschaltung 5 auf einer Leiterplatte der Vorrichtung 1, genauso wie der Hall-Sensor 2, angeordnet sind. Nicht dargestellt ist eine elektrische Verbindung zwischen der Vorrichtung 1 zu einer Auswerteschaltung, die die von der Vorrichtung 1 erzeugen Signale auswertet und in geeigneter Weise die Position des Messobjektes darstellt. Dabei kann die Position des Messobjektes kontinuierlich oder diskontinuierlich (z. B. Gurtschloss gesteckt oder offen) dargestellt werden.

Schließlich ist auf der einen Seite der Vorrichtung 1, vorzugsweise der Unterseite der Leiterplatte, ein Rückstellmagnet 6 angeordnet, der erforderlich ist, um wieder ein sicheres Zurückschalten zu gewährleisten.

In Figur 2 ist noch erkennbar, dass der Wirkabstand zwischen dem Hall-Sensor 2 und dem Schaltmagneten dahingehend vergrößert ist, dass in horizontaler Richtung Abstände bis etwa 15 mm durch die erfindungsgemäße Vorrichtung 1 und horizontale Abstände bis etwa 20 mm realisiert werden können, wohingegen es bei entsprechenden Vorrichtungen im Stand der Technik nur möglich war, horizontale und/oder vertikale Abstände bis höchstens 5 mm zu realisieren (siehe hierzu beispielsweise die direkte Anordnung der Gurtschließe zu dem Magnetschalter bei dem Gurtschlossschalter gemäß der EP 1 577 178 A1).

## Patentansprüche

1. Vorrichtung (1) zur Erfassung einer Position eines Messobjektes, die einem Hall-Sensor (2) sowie einen mit dem Hall-Sensor (2) zusammenwirkenden Schaltmagneten (3) aufweist, **dadurch gekennzeichnet, dass** der Hall-Platten aufweisende Hall-Sensor (2) mit Differenzsensoren versehen ist, die auf Feldunterschiede zwischen den Hall-Platten reagieren.

2. Vorrichtung (1) nach Anspruch 1, **dadurch gekennzeichnet, dass** die Differenzsensoren dazu ausgebildet sind, in der Nähe des Nullpunktes zu schalten, sodass das Einschalten bei Einwirken eines magnetischen Flusses durch den Schaltmagneten (3) und das Ausschalten bei einem invertierten magnetischen Fluss erfolgt.

3. Vorrichtung (1) nach Anspruch 1 oder 2, **dadurch gekennzeichnet, dass** in der Nähe zumindest einer der Hall-Platten ein ferromagnetischer Flusssammler angeordnet ist.

4. Vorrichtung (1) nach einem der vorhergehenden Ansprüche, **dadurch gekennzeichnet, dass** ein Löschmagnet vorgesehen ist.

5. Vorrichtung (1) nach einem der vorhergehenden Ansprüche, **dadurch gekennzeichnet, dass** der Hall-Sensor (2) einen Rückstellmagneten (6) aufweist.
